# EUROPEAN PATENT SPECIFICATION

(11) **EP 3 051 808 B1**
(45) Date of publication and mention of the grant of the patent: **14.11.2018**
(21) Application number: 14848735.8
(22) Date of filing: 16.07.2014
(51) Int. Cl.: H04N 7/18, B60R 1/00, G06T 1/00, H04N 5/225

(54) **INFORMATION PROVISION SYSTEM**
INFORMATIONSBEREITSTELLUNGSSYSTEM
SYSTÈME DE FOURNITURE D'INFORMATIONS

(30) Priority: 27.09.2013 JP 2013200958
(43) Date of publication of application: 03.08.2016
(73) Proprietor: NISSAN MOTOR CO., LTD., Yokohama-shi, Kanagawa 221-0023 (JP)
(72) Inventor: YASUHARA, Shinji, Atsugi-shi, Kanagawa 243-0123 (JP); TAKANO, Teruhisa, Atsugi-shi, Kanagawa 243-0123 (JP); KOUZAI, Akihiko, Atsugi-shi, Kanagawa 243-0123 (JP)
(74) Representative: Hoefer & Partner Patentanwälte mbB
(86) International application number: PCT/JP2014/068919
(87) International publication number: WO 2015/045578

(56) References cited:
- EP-A1- 2 528 330
- JP-A- 2005 303 450
- JP-A- 2006 027 556
- JP-A- 2009 118 169
- JP-A- 2011 175 507
- JP-A- 2011 175 507
- JP-A- 2013 009 065

## Description

### [Technical Field]

The present invention relates to an information presentation system which presents information about an image around a vehicle.

This application claims a priority on the basis of Japanese Patent Application No. 2013-200958, filed on September 27, 2013.

### [Background Art]

With regard to this kind of apparatus, a drive assist apparatus is known which displays a back view image of a vehicle when the shift lever of the vehicle is operated to the reverse position (Patent Document 1). Further, JP2011175507A discloses a system according to the preamble portion of claim 1.

### [Prior Art Document]

### [Patent Document]

[Patent Document 1] JP 2012-0162130 A

### [Summary of Invention]

### [Problems to be solved by Invention]

However, when a portable terminal apparatus which is not incorporated in an onboard apparatus acquires an image captured by an onboard camera via wireless communication and presents the acquired captured image, a delay occurs in the wireless communication, so that the timing of presenting the captured image also delays, which may be problematic.

A problem to be solved by the present invention is to present image information which represents a real-time state around a vehicle even when a delay occurs in the wireless communication between the onboard apparatus and the terminal apparatus.

### [Means for solving problems]

In the present invention, a predicted image to be captured at an existing position of the vehicle at a timing after a delay time passes is generated and presented using a captured image has been captured by an onboard camera, in accordance with a delay state, which includes the delay time of wireless communication between an onboard apparatus and a terminal apparatus, and state information of the vehicle. The above problem is thus solved.

### [Effect of Invention]

According to the present invention, the terminal apparatus presents the predicted image being assumed to be captured by the onboard camera at a timing after the delay time of the wireless communication passes, and can therefore be prevented from presenting a captured image at a past time, when a delay occurs in the wireless communication. The driver can recognize a real-time state around the vehicle even when a delay occurs in the communication between the onboard apparatus and the terminal apparatus.

### [Brief Description of Drawings]

[Fig. 1] Fig. 1 is a block diagram of an information presentation system according to an embodiment of the present invention.
[Fig. 2] Fig. 2 is a view showing an example of image information presented on a terminal apparatus.
[Fig. 3] Fig. 3 is a chart for explaining a delay with wireless communication.
[Fig. 4] Fig. 4 is a view for explaining a method of generating a predicted image in accordance with a delay of the wireless communication.
[Fig. 5] Fig. 5 is a flowchart showing a control procedure of an information presentation process.

### [Mode(s) for Carrying out the Invention]

Hereinafter, embodiments of the present invention will be described with reference to the drawings. The present embodiments will be described for a case in which the present invention is applied to an information presentation system 1000 comprising: an onboard apparatus 200 having one or more cameras provided on a vehicle; and a portable terminal apparatus 100 in wireless communication with the onboard apparatus 200.

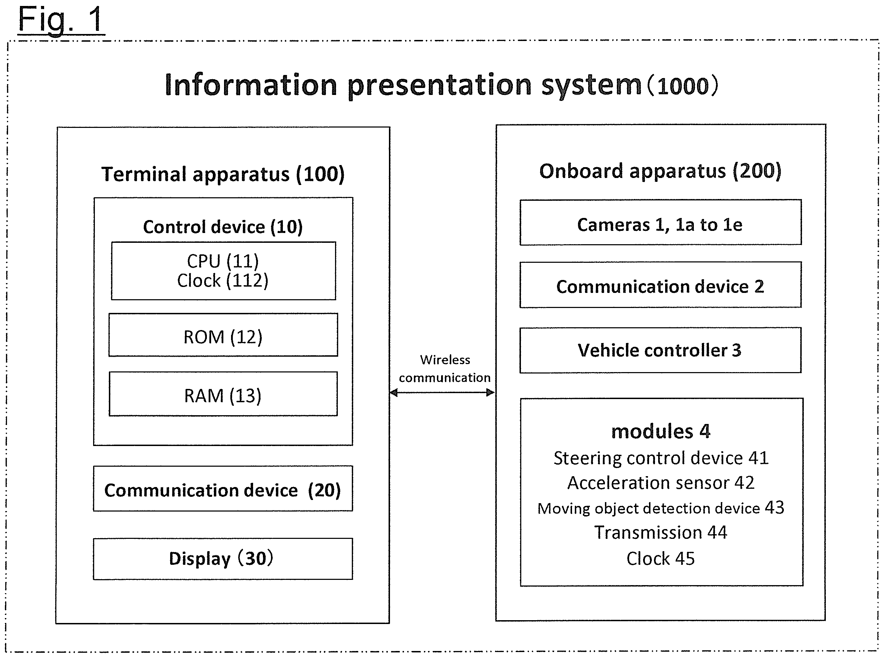

Fig. 1 is a block diagram of the information presentation system 1000 according to an embodiment of the present invention. The information presentation system 1000 comprises the onboard apparatus 200 and the terminal apparatus 100.

First, the onboard apparatus 200 of the present embodiment will be described with reference to Fig. 1. The onboard apparatus 200 comprises one or more cameras 1a to 1d, a communication device 2, a vehicle controller 3, and various types of onboard devices 4 (also referred to as "modules 4" in a collective term).

The one or more cameras 1a to 1d (also referred to as a "camera 1" or "cameras 1" in a collective term, here and hereinafter) are configured using imaging elements, such as CCD (Charge Coupled Devices). In the present embodiment, the cameras 1 are disposed at predetermined positions of a rear (rearward) portion of the vehicle, such as a rear finisher portion and roof spoiler portion. These cameras 1 capture images of an object or road surface which is present in a space behind the vehicle (rearview or back view images). The term "behind" the vehicle as used in the present embodiment encompasses not only the meaning of "just behind the vehicle," but also the meaning of "diagonally backward right" or "the diagonally backward left." In particular, the onboard apparatus 200 of the present embodiment includes a plurality of cameras 1a to 1d which are disposed at different positions outside the vehicle V. More specifically, the onboard apparatus 200 of the present embodiment includes cameras 1a to 1d which are each mounted on (provided at) a frontward predetermined position of the vehicle, such as a front grille portion, at a left-side predetermined position of the vehicle, such as a left-side mirror portion, or at a right-side predetermined position of the vehicle, such as a right-side mirror portion. Each camera 1 captures an image in a different direction around the vehicle. In the present embodiment, wide-angle cameras capable of imaging a wide-angle image are used as the cameras 1.

The communication device 2 of the onboard apparatus 200 transmits the images captured by the cameras 1 to the terminal apparatus 100, which will be described later. In an alternative embodiment, at least one of the cameras 1 may have a wireless communication function to transmit the captured images to external. The terminal apparatus 100 acquires the images captured by the cameras 1, via a wireless communication network. An image captured by each camera 1 is assigned with an identifier corresponding to the location (address) of the camera 1, and the terminal apparatus 100 can identify each of the images captured by each camera 1, on the basis of the identifier.

The vehicle controller 3 acquires information from each module of the vehicle and collectively manages the operation of the vehicle. The vehicle controller 3 of the present embodiment acquires state information which represents a state of the vehicle. The vehicle controller 3 acquires steering information from a steering control device 41 of the vehicle as the state information, acquires acceleration information or speed information from an acceleration sensor 42 as the state information, and acquires shift position information of a transmission 44 of the vehicle as the state information. The vehicle controller 3 transmits the acquired steering information and/or acceleration information (speed information) to the terminal apparatus 100. The terminal apparatus 100 includes a control device 10 which acquires a traveling direction (traveling angle) of the vehicle from the steering information. The control device 10 acquires a traveling direction also from the shift position information. The latter traveling direction is information which represents whether the vehicle is traveling forward or backward. The control device 10 further acquires a traveling amount of the vehicle from the acceleration information (speed information) and a traveling time. Thus, the control device 10 can calculate an existing position of the vehicle after a predetermined time passes, from the traveling direction and traveling amount of the vehicle.

The cameras 1, communication device 2, vehicle controller 3, and modules 4 of the onboard apparatus 200 are connected with one another via a CAN (Controller Area Network) or other onboard LAN and mutually exchange information.

Next, the terminal apparatus 100 will be described with reference to Fig. 1. The terminal apparatus 100 of the present embodiment is a portable terminal device, such as a smart-phone and tablet computer, which has a communication function. The terminal apparatus 100 of the present embodiment comprises a control device 10, a communication device 20, and a display 30.

The communication device 20 of the present embodiment exchanges information mutually with the communication device 2 of the onboard apparatus 200 separated from the terminal apparatus 100. The communication device 20 acquires the captured images, information about the state of the vehicle, and other information from the onboard apparatus 200.

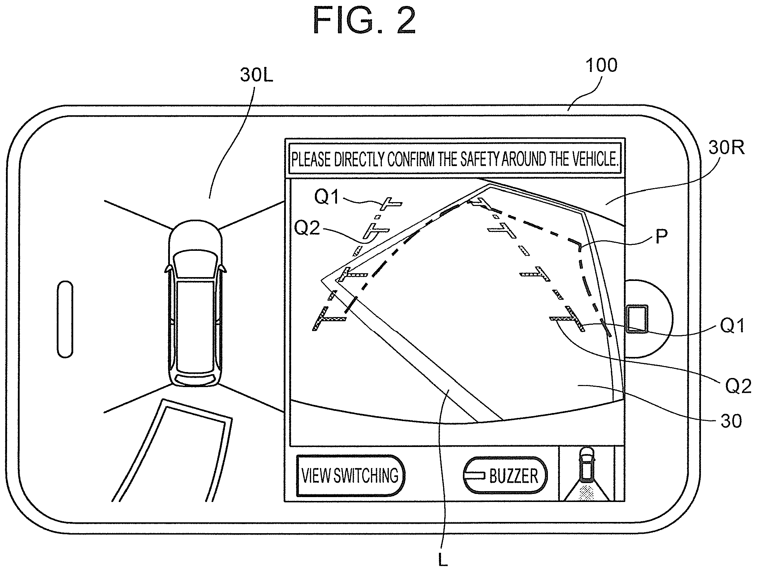

The display 30 of the present embodiment presents information about the captured images captured by the cameras 1 of the vehicle, a predicted image to be described later, and a delay state of the wireless communication. Fig. 2 is a view showing an example in which the display 30 of the terminal apparatus 100 presents an overhead image of the vehicle and a captured image behind the vehicle. As shown in Fig. 2, the overhead image viewed from a viewpoint above the vehicle is presented in a left-side screen area 30L of the display 30 of the onboard apparatus 200, while the captured back view image of the vehicle is presented in a right-side screen area 30R of the display 30. Guide lines are also superimposed on the captured back view image of the vehicle shown in the right-side screen area 30R. The guide lines are along a trajectory on which the vehicle is predicted to travel, and include predicted route lines P, vehicle width guide lines **Q1**, and distance guide lines **Q2**. The terminal apparatus 100 may be placed in a holder attached to an instrument panel or in the vicinity of a steering wheel of the vehicle so that the driver of the vehicle can easily recognize the terminal apparatus 100.

The control device 10 of the terminal apparatus 100 of the present embodiment comprises: a ROM (Read Only Memory) 12 which stores a program to present a predicted image in accordance with a delay time of the wireless communication; a CPU (Central Processing Unit) 11 as an operation circuit which executes the program stored in the ROM 12 thereby to function as the terminal apparatus 100 of the present embodiment; and a RAM (Random Access Memory) 13 which functions as an accessible storage.

The control device 10 of the terminal apparatus 100 of the present embodiment is a computer which coordinates the above-described hardware with software to achieve an image acquisition function, delay state determination function, moving object detection information acquisition function, predicted image generation function, guide line generation function, and presentation function, thereby executing these functions.

Descriptions below will be directed to each function achieved by the control device 10 of the terminal apparatus 100 according to the embodiment of the present invention.

The image acquisition function of the control device 10 will first be described. The control device 10 of the present embodiment acquires captured image(s) around the vehicle captured by the onboard camera(s) 1 from the onboard apparatus 200 via the communication device 20. Although not particularly limited, in the present embodiment, the control device 10 acquires captured back view image(s) of the vehicle. In addition or alternatively, the control device 10 may acquire captured front view image(s) or captured sideward view image(s). In an embodiment, the control device 10 may acquire a monitoring image around the vehicle, which is generated by the onboard apparatus 200, and in which the vehicle is viewed from a virtual viewpoint above the vehicle. The monitoring image is generated using a plurality of images captured by the cameras 1 which are disposed at different positions on the vehicle. The monitoring image is an overhead image generated by projecting these captured images onto a projection plane in which the vehicle is viewed from a virtual viewpoint above the vehicle. The control device 10 uses the acquired captured images and/or monitoring image as information to be presented on the display 30 in a specific situation, such as when parking the vehicle and reversing the vehicle.

The delay state determination function of the control device 10 will be described. The control device 10 of the present embodiment determines a delay state including a delay time of the wireless communication between the onboard apparatus 200 and the terminal apparatus 100. The delay time is obtained from a difference between a reference communication time under a predetermined good communication environment and an actually measured communication time under a communication environment in which the transmission and reception are actually performed. Although not particularly limited, the control device 10 refers to a clock 45 of the onboard apparatus 200 and a clock 112 of the terminal apparatus 100 to synchronize them with each other and then measures the actual communication time required for information to be exchanged between the onboard apparatus 200 and the terminal apparatus 100 via the wireless communication and thereby the control device 10 calculates the delay time. Specifically, the onboard apparatus 200 transmits information to which the transmission timing is appended to the terminal apparatus 100. When acquiring the information, the terminal apparatus 100 returns acknowledgement information to the onboard apparatus 200. The onboard apparatus 200 calculates half the time from the transmission timing when transmitting the information to the terminal apparatus 100 to the reception timing when receiving the acknowledgement information transmitted from the terminal apparatus 100, as the communication time required for the wireless communication. Similarly, the reference communication time can be calculated as a communication time for the wireless communication under a predetermined communication environment without communication load. The actually measured communication time varies from moment to moment in accordance with various factors, such as the number of terminal apparatuses accessing the wireless communication line network and the volume of information to be exchanged. Therefore, the control device 10 acquires the communication time at a predetermined period and continuously calculates the delay time which is the difference from the reference communication time. According to the present embodiment, an accurate delay time can be calculated because the delay time is calculated after preliminarily synchronizing the onboard apparatus 200 and the terminal apparatus 100 with each other.

The delay time includes a regular time which is preliminarily determined in accordance with the capability of the communication facilities and a variable time which is caused by various factors, such as the communication volume. The regular time can be preliminarily stored in the onboard apparatus 200 or the terminal apparatus 100. In view of reducing the processing load, the regular delay time stored may be read out to determine the delay state.

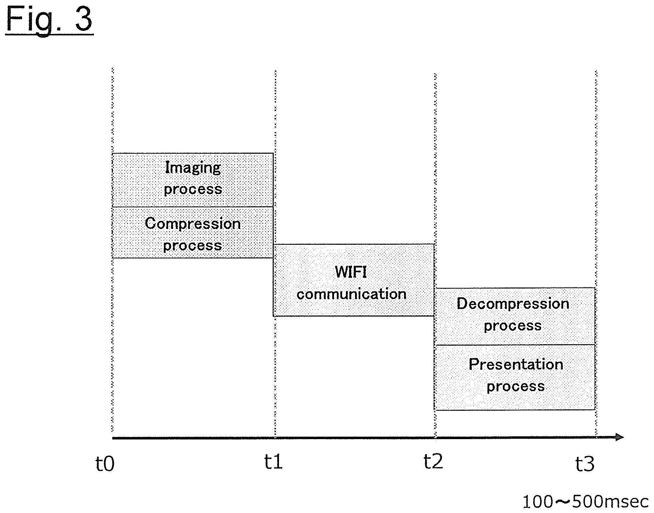

Causes of occurrence of the delay state in presenting the images captured by the cameras 1 are not only the previously-described delay time of the wireless communication. The causes of the delay state include, as shown in Fig. 3, the first to third time periods as described below which are required to complete some processes from an image capturing process to an image presentation process. The first time period as referred to herein is a time from **t0** to **t1** during which the onboard apparatus 200 performs a process to capture images around the vehicle and a process to compress (encode) the captured images. The second time period is a time from **t1** to **t2** which is required for the wireless communication. The third time period is a time from **t2** to **t3** which is required for a process to decompress (decode) the compressed captured images and a process to present the decompressed captured images on the display 30. Thus, the delay state with the wireless communication occurs when a long period of time is taken for the processes performed at the onboard apparatus 200 from the time of capturing images to the time of transmitting the captured images, or for the communication between the onboard apparatus 200 and the terminal apparatus 100, or for the processes performed at the terminal apparatus 100 from the time of receiving the captured images to the time of presenting the captured images.

According to the technique of communication at the time of filing the present application, when no delay occurs in the wireless communication, a time of about 100 to 500 milliseconds is required from the timing of capturing images to the timing of completing the presentation process for the images. Even during such a short period of delay time, it is not preferred that the image information captured at a past time is presented as if it is the image information captured at the real time. It is particularly undesirable if the communication delay occurs to prolong the time from the image capturing to the image presentation. When the captured images are exchanged via an internal communication network (such as CAN) in the onboard apparatus 200, the time from the image capturing to the image presentation is substantially constant and can therefore be controlled uniformly. In contrast, when the captured images obtained by the onboard apparatus 200 are transmitted to the terminal apparatus 100 via public wireless communication and presented using the display 30 of the terminal apparatus 100, the delay of communication may have to be taken into consideration. In addition, the above-described third time period is highly dependent on the processing ability of the terminal apparatus 100. It is therefore difficult to uniformly define the delay time because the terminal apparatus 100, which may be individually and personally owned, has different performance or state.

With regard to the second time period, the control device 10 of the present embodiment measures the delay time of the wireless communication between the terminal apparatus 100 and the onboard apparatus 200 using the above scheme.

With regard to the above-described third time period, the control device 10 of the present embodiment acquires a terminal apparatus-side processing time required for the terminal apparatus 100 to present a predicted image after acquiring the captured images, and adds the terminal apparatus-side processing time to the delay time of the wireless communication and then calculates a delay time of information presentation processing. This delay time can be used to determine the delay state. Although not particularly limited, it is preferred that the terminal apparatus-side processing time is experimentally calculated in advance and stored in the terminal apparatus 100 in a readable manner. The delay state can be correctly determined by not only calculating the delay of the wireless communication but also calculating a delay time through addition of the time required for the processes at the terminal apparatus 100.

With regard to the above-described first time period, the control device 10 of the present embodiment may calculate a delay time through addition of the time required for the processes performed at the onboard apparatus 200 from the time of acquisition of the captured images (image capturing) to the time of transmission of the captured images. The delay state can be further correctly determined by not only calculating the communication delay time of the wireless communication but also calculating a delay time through addition of the time required for the processes at the onboard apparatus 200.

In addition, the control device 10 of the present embodiment determines whether the wireless communication with the communication device 2 is disrupted. When the wireless communication is disrupted, the control device 10 causes the display 30 to present that the wireless communication is disrupted. In a situation in which the wireless communication with the communication device 2 is disrupted, it is difficult to acquire in real time the captured images at the present moment. In other words, in a situation in which the wireless communication with the communication device 2 is disrupted, it is highly possible that the captured images presented on the display 30 are images captured at a past time. According to the present embodiment, by presenting that the wireless communication with the communication device 2 is disrupted, it is possible to inform the driver that the presented captured images are not real-time images.

The control device 10 of the present embodiment determines a degree of reliability of the wireless communication in accordance with the delay state. When the delay time is long and the delay state of the wireless communication is bad, the control device 10 determines that the degree of reliability of the wireless communication is low. On the other hand, when the delay time is short and the delay state of the wireless communication is not bad (communication state is good), the control device 10 determines that the degree of reliability of the wireless communication is high. The degree of reliability of the wireless communication can be defined in accordance with the communication time in the wireless communication. As the communication time becomes longer, the degree of reliability of the wireless communication can be set lower. The control device 10 presents the determined degree of reliability of the wireless communication on the display 30. In a situation in which the communication time (delay time) in the wireless communication is long and the degree of reliability of the wireless communication is low, it is difficult to acquire in real time the captured images at the present moment. In other words, it is highly possible that the captured images presented on the display 30 are images captured at a past time. In this case, according to the present embodiment, the degree of reliability of the wireless communication is presented to be low. This can inform the driver that the presented captured images are not real-time images.

The moving object detection information acquisition function will then be described. The control device 10 of the present embodiment acquires detection information whether a moving object is present around the vehicle. The control device 10 acquires the information whether a moving object is present, from the onboard apparatus 200. The onboard apparatus 200 includes a moving object detection device 43. The moving object detection device 43 determines whether a moving object is present around the vehicle, on the basis of a change in time of features which are extracted from the images captured by the onboard cameras 1. The scheme of detecting a moving object by using the captured images is not particularly limited, and it is possible to appropriately utilize a scheme which has been known at the time of filing the present application. When acquiring the detection information that a moving object is present, the control device 10 determines the delay state. There may be a case in which a moving object does not appear in the captured images even though the moving object is present around the vehicle, because the timing of presenting the captured images is delayed if a delay occurs in the wireless communication. When a moving object is present around the vehicle, the delay of the wireless communication may have to be particularly taken into consideration. The control device 10 of the present embodiment determines the delay state of the wireless communication when a moving object is present around the vehicle, and a predicted image can therefore be presented in accordance with the delay state of the wireless communication.

The predicted image generation function of the control device 10 will then be described. The control device 10 acquires state information of the vehicle and calculates an existing position of the vehicle after the delay time on the basis of the state information of the vehicle. The control device 10 of the present embodiment acquires a steering angle and vehicle speed (or acceleration) of the vehicle as the state information of the vehicle. The control device 10 calculates an existing position of the vehicle after a predetermined time (after the delay time) when the vehicle travels with the acquired state information (in state values such as steering angle and speed). The scheme of calculating an existing position of the vehicle when the vehicle travels in a certain state for a predetermined time is not particularly limited, and it is possible to appropriately employ a scheme which has been known at the time of filing the present application.

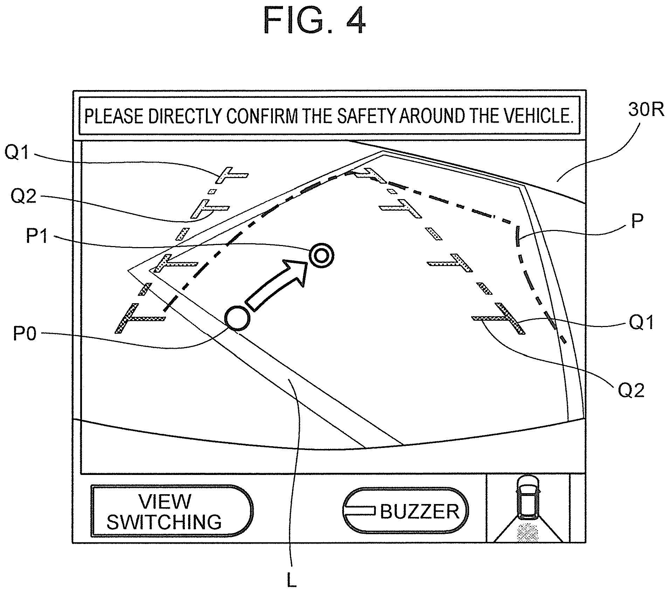

The control device 10 generates a predicted image using the captured image(s) that has been acquired so as to obtain the predicted image to be captured by the camera at a calculated (or estimated) position of the vehicle, a predicted image which is an image to be captured at the calculated (or estimated) position of the vehicle. In other words, the control device 10 takes account of the traveling direction and traveling amount of the vehicle and predicts and generates a predicted image which is an image to be captured by a camera 1 at an existing position of the vehicle after traveling when the delay time passes. Fig. 4 is a view which shows a captured back view image of the vehicle as displayed in the screen area 30R of Fig. 2. As shown in Fig. 4, a predetermined first reference point **P0** is set at timing **tx0**. As the vehicle travels with the steering angle and speed in the state information, the first reference point P0 on the captured image moves to a second reference point **P1** at timing **tx1** after a delay time **ty**. In this example, the control device 10 calculates a reverse traveling amount (traveling amount) on the basis of the state information of the vehicle and the delay time **ty**. In a captured image which the onboard camera 1 captures at an existing position after the vehicle travels, the second reference point **P1** corresponds to the second reference point **P0**. The control device 10 calculates image information at the second reference point **P1**. That is, the control device 10 foresees (predicts) an image which will be captured by the onboard camera 1 at the timing **tx1** after the delay time **ty**.

The control device 10 obtains a traveling direction of the vehicle from the steering angle and obtains a traveling speed of the vehicle from the speed information. The control device 10 predicts an image being assumed to be captured by the onboard camera 1 at an existing position of the vehicle after the delay time passes, on the assumption that the vehicle travels with the present traveling direction and traveling speed. In other words, the control device 10 calculates where the first reference point **P0** of the captured image by the onboard camera 1 at the timing **tx0** is positioned in an image captured at the timing **tx1** after the delay time **ty** passes from the timing **tx0**. The control device 10 sets coordinates of the image captured by the camera 1 at the timing **tx1** after the delay time **ty** passes from the timing **tx0**, using the traveling direction and traveling amount of the vehicle. The control device 10 performs coordinate conversion so that the images captured by the camera(s) 1 at the timing **tx0** (camera coordinates at timing **tx0)** are arranged on the newly set coordinates (camera coordinates at timing **tx1**). The same coordinate conversion is executed for each point on coordinates. Through this process, the control device 10 generates, from the acquired captured images, a predicted image which is an image captured at the calculated existing position of the vehicle after the delay time **ty** passes. Thus, the control device 10 generates a predicted image being an image which is assumed to be captured by the onboard camera 1 at a position at which the vehicle is present after traveling with the direction and speed of the state information during the delay time **ty**, i.e. during the period of time from the timing **tx0** to the timing **tx1**.

In Fig. 4, it is assumed that the first reference point **P0** on the image captured by the onboard camera 1 at the timing **tx0** corresponds to the second reference point **P1** at the timing **tx1** after the delay time **ty** passes. The predicted image is an image when the first reference point **P0** on the captured image shown in Fig. 4 has converted into the second reference point **P1**. In this example, the vehicle travels in the left-rear direction (with respect to the forward direction of the vehicle traveling). The predicted image, which reflects the back view of the vehicle, is shifted rightward (in the image of the figure) with respect to the captured image. In a practical scene, the camera 1 captures an image area wider than an image area that shown in Fig. 4. In particular, if a wide-angle camera is employed as the camera 1, a captured image including a wide-angle image will be acquired. The control device 10 performs the coordinates conversion for a necessary region of the captured image to generate a predicted image, and clips (cut and copy) the predicted image from the captured image in accordance with the display region of the display 30. Through this process, the control device 10 can generate a predicted image without deficiency.

The presentation function of the control device 10 will be described. The control device 10 presents the generated predicted image on the display 30. As shown in Fig. 2, the control device 10 presents an overhead image, which is an image viewed from a viewpoint above the vehicle, in the left-side screen area 30L of the display 30, and presents a captured image or predicted image in the right-side screen area 30R of the display 30.

The information presentation system 1000 of the present embodiment has a feature of generating a predicted image being an image which is assumed to be captured by the onboard camera after the delay time of the wireless communication. According to this feature, even when a delay occurs in the wireless communication between the onboard apparatus 200 and the terminal apparatus 100, it is possible to present a predicted image which shows the real-time state around the vehicle. If a communication delay occurs when presenting the captured image captured by the onboard camera 1 on the terminal apparatus 100, the terminal apparatus 100 will present a captured image at a past time.

It is assumed a situation in which an object is approaching the own vehicle but does not appear in an image which is clipped from a captured image of a past time to match the display frame of the display 30. In this situation, if a delay occurs in the wireless communication, the captured image of the past time will be displayed, from which the driver cannot recognize the object approaching. To this problem, the control device 10 of the present embodiment generates the predicted image by clipping an image from a captured image with reference to the position of the camera 1 of the vehicle after the delay time when the vehicle travels in accordance with the state information of the vehicle. Even a moving object, which was not (displayed) within the display frame at the past timing but is within the display frame at the present timing with consideration for the delay time, is displayed in the predicted image. The driver can recognize the presence of the moving object from the predicted image. In the present embodiment, when a delay occurs in the wireless communication, the terminal apparatus 100 presents the foreseeing (or projection) predicted image being assumed to be captured after the delay time passes rather than a captured image at a past time. Therefore, it is possible to notify the driver of the presence of a moving object which was not included in an image based on a captured image at a past time but is approaching.

The control device 10 of the present embodiment further has a guide line generation function to generate one or more guide lines along a trajectory on which the vehicle is predicted to travel on the basis of the state information of the vehicle. More specifically, the control device 10 generates guide lines including: "predicted route lines **P**" which represent a trajectory on which the vehicle is predicted to travel; "vehicle width guide lines **Q1**" which represent positions of the side surfaces of the vehicle when the vehicle travels; and "distance guide lines **Q2**" which represent positions along the traveling direction of the vehicle when the vehicle travels. The control device 10 superimposes the generated guide lines on the predicted image, as shown in Figs. 2 and 4.

During this operation, in the present embodiment, the control device 10 changes a display form of the guide lines in accordance with the delay state determined by the previously-described delay state determination function. For example, when the delay time is long and the delay state is bad, i.e., when the degree of reliability of the wireless communication is low, the guide lines are displayed in a different display form than the default display form which is used when the degree of reliability of the wireless communication is not lower than a standard value. Displaying the guide lines in a different display form than the normal (default) display form can call the driver's attention. When the degree of reliability of the wireless communication is low, changing the display form of the guide lines allows the driver to pay great attention to the surroundings even though the accuracy of the guide lines may possibly deteriorate.

Specifically, the display form of the guide lines to be displayed when the delay time is long and the delay state is bad may be set such that, for example, the color, transparency, line width, and/or mode (dashed-dotted line, dashed-two dotted line) are different from those of the guide lines to be displayed when the delay time is short and the delay state is not bad (the state of the wireless communication is good). As an example, when the delay time is short and the delay state is not bad (the state of the wireless communication is good), the guide lines may be displayed as lines of a retreating color, such as blue, green and blue-violet, which is relatively not distinguishable, broken lines, and/or relatively thin lines. On the other hand, when the delay time is long and the delay state is bad, the guide lines may be displayed as lines of an advancing color, such as red, orange and yellow, which is relatively distinguishable, solid lines, and/or relatively wide lines.

The examples of Figs. 2 and 4 are described as an example of presenting a predicted image from captured back view images of the vehicle. In an alternative embodiment, the control device 10 can generate and present a predicted image obtained by projecting predicted images, which are images captured by a plurality of cameras 1 at a calculated position of the vehicle, onto a projection plane in which the vehicle is viewed from a virtual viewpoint above the calculated position. In other words, the predicted image after the delay time passes can be displayed in a form of an overhead image as shown in the left-side region 30L of the display 30 of Fig. 2. In an embodiment, the control device 10 can generate the predicted image only in the traveling direction of the vehicle, while it can generate an images in the direction other than the traveling direction by using past images. When the vehicle travels backward, the control device 10 can generate the predicted image only in the backward direction and an overhead image by using the predicted image in the backward direction and captured images ahead and at a side or sides. According to this embodiment, the generated predicted image can be usefully used not only to confirm the situation in the traveling direction but also to confirm the whole situation around the vehicle.

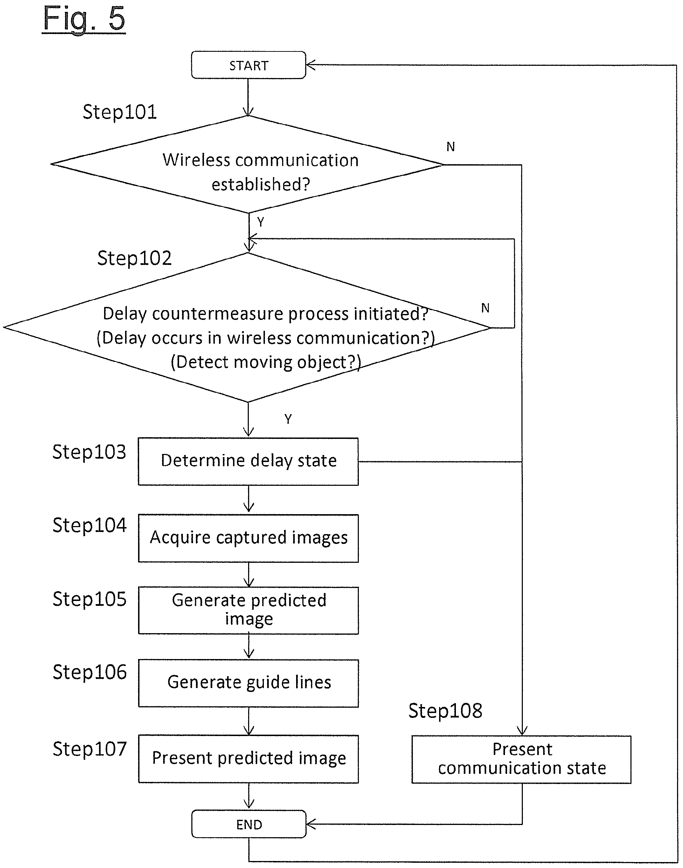

Descriptions will then be directed to a processing procedure in the information presentation system 1000 of an embodiment of the present invention. Fig. 5 is a flowchart which shows a control procedure performed in the information presentation system 1000 according to the present embodiment.

In step 101, the control device 10 of the terminal apparatus 100 of the present embodiment confirms whether the wireless communication is established. If the wireless communication is not established, i.e., if the wireless communication is disrupted, the control device 10 displays this fact on the display 30.

If the wireless communication is established, the process proceeds to step 102 in which the control device 10 initiates a delay countermeasure process. In the delay countermeasure process, the control device 10 generates a predicted image being assumed to be captured after the delay time passes, and the control device 10 displays the predicted image on the display 30. In the present embodiment, when acquiring detection information that a moving object is present, the control device 10 initiates the delay countermeasure process. Trigger for the delay countermeasure process is not limited to this. The delay countermeasure process may be initiated if the communication delay time of the wireless communication comes to a predetermined value or longer. Of course, this process may be repeated at a predetermined period.

Step 102 is followed by step 103 in which the control device 10 determines the delay state. The delay state is determined using the delay time. The delay time may be measured at the onboard apparatus 200 or at the terminal apparatus 100. The terminal apparatus 100 of the present embodiment synchronize itself with the onboard apparatus 200 and calculates, as the communication time, half the time required for round-trip communications from when transmitting some information to the onboard apparatus 200 to when acquiring an acknowledgement signal from the onboard apparatus. The control device 10 calculates a time difference between the actually measured communication time and the communication time measured in a standard state to obtain the delay time at the time of actual measurement. The obtained delay time is used to determine the degree of reliability of the wireless communication in accordance with the delay state. As the delay time becomes longer, the delay state is worse and the degree of reliability of the wireless communication is lower. In this operation, the delay time and delay state are determined in consideration of the time associated with the decompression and presentation processes for the image information acquired at the terminal apparatus 100. The control device 10 presents the determination result regarding the delay state on the display 30. Thus, the control device 10 provides the driver with the degree of reliability of the wireless communication, i.e. advice about the accuracy of the information to be presented.

In step 104, the control device 10 acquires the captured images captured by the cameras 1 and the state information of the vehicle from the onboard apparatus 200.

In the following step 105, the control device 10 generates a predicted image. The control device 10 calculates an existing position of the vehicle after the delay time on the basis of the state information of the vehicle and generates a predicted image so as to predict the predicted image to be captured by a camera 1 at the calculated existing position of the vehicle using the captured images that has been acquired.

In step 106, the control device 10 generates guide lines along a trajectory on which the vehicle is predicted to travel on the basis of the state information of the vehicle.

In step 107, the control device 10 superimposes the generated guide lines on the captured image or predicted image and presents the image on the display 30.

The terminal apparatus 100 and information presentation system 1000 according to the embodiment of the present invention, which are configured and operate as described above, have advantageous effects as below.
(1) The information presentation system 1000 of the present embodiment generates a predicted image so as to predict (or project, or foresee) the predicted image to be captured by the onboard camera after the delay time of the wireless communication. The information presentation system 1000 presents the predicted image which shows a real-time (or present time, or without time lag) state around the vehicle even when a delay occurs in the communication between the onboard apparatus 200 and the terminal apparatus 100. When a delay occurs in the wireless communication, the information presentation system 1000 can prevent the terminal apparatus 100 from presenting a captured image at a past time.
(2) The information presentation system 1000 of the present embodiment calculates the delay time after preliminarily synchronizing the onboard apparatus 200 and the terminal apparatus 100 with each other, and can therefore calculate an accurate delay time.
(3) The information presentation system 1000 of the present embodiment not only calculates the delay of the wireless communication but also calculates a delay time through addition of the time required for the processes at the terminal apparatus 100, and can therefore determine the delay state correctly.
(4) The information presentation system 1000 of the present embodiment presents that the wireless communication via the communication device 2 is disrupted, and can thereby inform the driver that the presented captured images are not real-time images.
(5) The information presentation system 1000 of the present embodiment presents that the degree of reliability of the wireless communication via the communication device 2 is low, and can thereby inform the driver that the presented captured images are not real-time images.
(6) When the delay time is long and the delay state is bad, i.e., when the degree of reliability of the wireless communication is low, the information presentation system 1000 of the present embodiment displays the guide lines in a different display form than the default display form, and thereby calls the driver's attention. When the degree of reliability of the wireless communication is low, changing the display form of the guide lines allows the driver to pay attention to the surroundings even though the accuracy of the guide lines may possibly deteriorate.
(7) The information presentation system 1000 of the present embodiment determines the delay state of the wireless communication when a moving object is present around the vehicle. The information presentation system 1000 can present a predicted image in accordance with the delay state of the wireless communication in a situation to be paid great attention.
(8) The information presentation system 1000 of the present embodiment presents a generated, predicted overhead image, and therefore not only can confirm the situation in the traveling direction but also can confirm the whole situation around the vehicle.

In the present description, the terminal apparatus 100 and information presentation system 1000 are described as examples of an aspect of the information presentation system according to the present invention, but the present invention is not limited thereto.

In the present description, the information presentation system 1000 comprising the onboard apparatus 200 and the terminal apparatus 100, which comprises the control device 10 including the CPU 11, ROM 12 and RAM 13, is described as an example of an aspect of the information presentation system according to the present invention, but the present invention is not limited thereto.

In the present description, the terminal apparatus 100 comprising the control device 10 which executes the image acquisition function, delay state determination function, predicted image generation function, presentation function, guide line generation function, and moving object detection information acquisition function, the communication device 20, and the display 30, is described as an aspect of a terminal apparatus comprising an image acquisition unit, delay state determination unit, predicted image generation unit, presentation unit, guide line generation unit, and moving object detection information acquisition unit, but the present invention is not limited thereto.

In the present description, the onboard apparatus 200 comprising the cameras 1, communication device 2, vehicle controller 3, and modules 4 is described as an aspect of an onboard apparatus comprising a camera and having a communication function, but the present invention is not limited thereto.

### [Description of Reference Numerals]

1000... Information presentation system
100... Terminal apparatus
   10... Control device
      11... CPU
      12... ROM
      13... RAM
   20... Communication device
   30... Display
200... Onboard apparatus
1, 1a to 1d... Camera
2... Communication device
3... Vehicle controller
4... Modules
   41... Steering control device
   42... Acceleration sensor
   43... Moving object detection device

## Claims

1. An information presentation system (1000) comprising:
an onboard apparatus (200) including a camera (1) provided on a vehicle; and
a terminal apparatus (100) performing wireless communication with the onboard apparatus (200),
the terminal apparatus (100) comprising:
an image acquisition unit configured to acquire a captured image around the vehicle captured by the camera (1);
a delay state determination unit configured to determine a delay state including a delay time of the wireless communication between the onboard apparatus (200) and the terminal apparatus (100);
**characterized by**:
a predicted image generation unit configured to:
acquire state information of the vehicle from the onboard apparatus (200);
calculate an existing position of the vehicle after the delay time, by using the state information of the vehicle; and
generate a predicted image using the captured image that has been acquired so as to predict the predicted image to be captured by the camera (1) at the calculated existing position of the vehicle after travelling when the delay time passes; and
a presentation unit (30) configured to present the predicted image.

2. The information presentation system (1000) according to claim 1, wherein
the delay state determination unit calculates the delay time by, after synchronizing the onboard apparatus (200) and the terminal apparatus (100) with each other, measuring a time required for information to be exchanged between the onboard apparatus (200) and the terminal apparatus (100) via the wireless communication.

3. The information presentation system (1000) according to claim 1, wherein
the delay state determination unit determines the delay state by obtaining a terminal apparatus-side processing time required for the terminal apparatus (100) to present the predicted image after acquiring the captured image, adding the terminal apparatus-side processing time to the delay time of the wireless communication, and calculating a delay time of information presentation processing.

4. The information presentation system (1000) according to any one of claims 1 to 3, wherein
the delay state determination unit determines whether the wireless communication is disrupted, and causes the presentation unit (30) to present that the wireless communication is disrupted when the wireless communication is disrupted.

5. The information presentation system (1000) according to any one of claims 1 to 4, wherein
the delay state determination unit determines a degree of reliability of the wireless communication in accordance with the delay state, and
the presentation unit (30) presents the degree of reliability.

6. The information presentation system (1000) according to any one of claims 1 to 5, wherein
the terminal apparatus (100) further comprises a guide line generation unit configured to generate a guide line along a trajectory on which the vehicle is predicted to travel on the basis of the state information of the vehicle, and
the presentation unit (30), when superimposing the generated guide line on the predicted image, changes a display form of the guide line in accordance with the delay state determined by the delay state determination unit.

7. The information presentation system (1000) according to any one of claims 1 to 6, wherein
the terminal apparatus (100) further comprises a moving object detection information acquisition unit configured to acquire detection information whether a moving object is present around the vehicle, and
the delay state determination unit determines the delay state when acquiring detection information that a moving object is present.

8. The information presentation system (1000) according to any one of claims 1 to 7, wherein
the camera (1) includes a plurality of cameras (1a, 1b, 1c, 1d, 1e) mounted at different positions on the vehicle, and
the predicted image generation unit generates one predicted image obtained by projecting predicted images onto a projection plane in which the vehicle is viewed from a virtual viewpoint above the calculated position of the vehicle, the one predicted images being images which are captured by the plurality of cameras (1a, 1b, 1c, 1d, 1e) at the calculated position.

## Patentansprüche

1. Informationsdarstellungssystem (1000), umfassend:
eine bordseitige Vorrichtung (200) mit einer Kamera (1), die an einem Fahrzeug vorgesehen ist; und
eine Endgerätvorrichtung (100), die eine drahtlose Kommunikation mit der bordseitigen Vorrichtung (200) durchführt,
wobei die Endgerätvorrichtung (100) umfasst:
eine Bilderfassungseinheit, die zum Erfassen eines von der Kamera (1) aufgenommenen Bild rund um das Fahrzeug konfiguriert ist;
eine Verzögerungszustand-Ermittlungseinheit, die zum Ermitteln eines Verzögerungszustands einschließlich einer Verzögerungszeit der drahtlosen Kommunikation zwischen der bordseitigen Vorrichtung (200) und der Endgerätvorrichtung (100) konfiguriert ist;
**gekennzeichnet durch**:
e ine Vorhersagebild-Erzeugungseinheit, die konfiguriert ist, zum:
Akquirieren von Zustandsinformationen des Fahrzeugs von der bordseitigen Vorrichtung (200);
Berechnen einer bestehenden Position des Fahrzeugs nach der Verzögerungszeit unter Verwendung der Zustandsinformationen des Fahrzeugs; und
Erzeugen eines Vorhersagebildes unter Verwendung des aufgenommenen Bildes, das zum Vorhersagen des von der Kamera (1) zu erfassenden Vorhersagebilds an der berechneten bestehenden Position des Fahrzeugs nach der Fahrt akquiriert wurde, wenn die Verzögerungszeit abgelaufen ist; und
e ine Darstellungseinheit (30), die zum Darstellen des Vorhersagebilds konfiguriert ist.

2. Informationsdarstellungssystem (1000) nach Anspruch 1,
wobei
die Verzögerungszustand-Ermittlungseinheit die Verzögerungszeit, nach einer Synchronisierung der bordseitigen Vorrichtung (200) und der Endgerätvorrichtung (100) miteinander, durch Messen einer Zeit berechnet, die für die auszutauschenden Informationen zwischen der bordseitigen Vorrichtung (200) und der Endgerätvorrichtung (100) über die drahtlose Kommunikation erforderlich ist.

3. Informationsdarstellungssystem (1000) nach Anspruch 1, wobei
die Verzögerungszustand-Ermittlungseinheit den Verzögerungszustand durch Erhalten einer endgerätvorrichtung-seitigen Verarbeitungszeit ermittelt, die für die Endgerätvorrichtung (100) zum Darstellen des Vorhersagebilds nach dem Akquirieren des aufgenommenen Bilds erforderlich ist, Hinzufügen der endgerät-seitigen Verarbeitungszeit zur Verzögerungszeit der drahtlosen Kommunikation und Berechnen einer Verzögerungszeit der Informationsdarstellungsverarbeitung.

4. Informationsdarstellungssystem (1000) nach einem der Ansprüche 1 bis 3,
wobei
die Verzögerungszustand-Ermittlungseinheit ermittelt, ob die drahtlose Kommunikation unterbrochen ist, und bewirkt, dass die Darstellungseinheit (30) anzeigt, dass die drahtlose Kommunikation gestört ist, wenn die drahtlose Kommunikation unterbrochen ist.

5. Informationsdarstellungssystem (1000) nach einem der Ansprüche 1 bis 4,
wobei
die Verzögerungszustand-Bestimmungseinheit einen Grad an Zuverlässigkeit der drahtlosen Kommunikation gemäß dem Verzögerungszustand ermittelt, und
die Darstellungseinheit (30) den Grad der Zuverlässigkeit zeigt.

6. Informationsdarstellungssystem (1000) nach einem der Ansprüche 1 bis 5,
wobei
die Endgerätvorrichtung (100) ferner eine Führungslinien-Erzeugungseinheit umfasst, die zum Erzeugen einer Führungslinie entlang einer Bewegungsbahn konfiguriert ist, auf der das Fahrzeug basierend auf den Zustandsinformationen des Fahrzeugs voraussichtlich fährt, und
die Darstellungseinheit (30) beim Überlagern der erzeugten Führungslinie auf dem Vorhersagebild eine Anzeigeform der Führungslinie gemäß dem durch die Verzögerungszustand-Ermittlungseinheit ermittelten Verzögerungszustand ändert.

7. Informationsdarstellungssystem (1000) nach einem der Ansprüche 1 bis 6,
wobei
die Endgerätvorrichtung (100) ferner eine Bewegungsobjekterfassung-Informationsakquisitionseinheit umfasst, die zum Akquirieren von Erfassungsinformationen, ob ein sich bewegendes Objekt um das Fahrzeug vorhanden ist, konfiguriert ist, und
die Verzögerungszustand-Ermittlungseinheit den Verzögerungszustand beim Akquirieren von Erfassungsinformationen, dass ein sich bewegendes Objekt vorhanden ist, ermittelt.

8. Informationsdarstellungssystem (1000) nach einem der Ansprüche 1 bis 7,
wobei
die Kamera (1) eine Vielzahl von Kameras (1a, 1b, 1c, 1d, 1e) umfasst, die an unterschiedlichen Positionen am Fahrzeug angebracht sind, und
die Vorhersagebild-Erzeugungseinheit ein Vorhersagebild erzeugt, das durch Projizieren von Vorhersagebildern auf eine Projektionsebene erhalten wird, in der das Fahrzeug von einem virtuellen Standpunkt oberhalb der berechneten Position des Fahrzeugs angezeigt wird, wobei die Vorhersagebilder Bilder sind, die durch die Vielzahl von Kameras (1a, 1b, 1c, 1d, 1e) an der berechneten Position aufgenommen wurden.

## Revendications

1. Système de présentation d'informations (1000) comprenant :
un appareil embarqué (200) comportant un appareil photo (1) disposé sur un véhicule; et
un appareil terminal (100) effectuant une communication sans fil avec l'appareil embarqué (200),
l'appareil terminal (100) comprenant :
une unité d'acquisition d'image configurée pour acquérir une image capturée autour du véhicule capturée par l'appareil photo (1) ;
une unité de détermination d'état de retard configurée pour déterminer un état de retard comportant un temps de retard de la communication sans fil entre l'appareil embarqué (200) et l'appareil terminal (100) ;
**caractérisé par** :
u ne unité de génération d'image prédite configurée pour :
acquérir des informations d'état du véhicule à partir de l'appareil embarqué (200) ;
calculer une position existante du véhicule après le temps de retard, en utilisant les informations d'état du véhicule ; et
générer une image prédite en utilisant l'image capturée qui a été acquise de manière à prédire l'image prédite à capturer par l'appareil photo (1) à la position existante calculée du véhicule après déplacement lorsque le temps de retard s'écoule ; et
u ne unité de présentation (30) configurée pour présenter l'image prédite.

2. Système de présentation d'informations (1000) selon la revendication 1, dans lequel
l'unité de détermination d'état de retard calcule le temps de retard en mesurant, après synchronisation de l'appareil embarqué (200) et de l'appareil terminal (100) l'un avec l'autre, un temps nécessaire pour l'échange d'informations entre l'appareil embarqué (200) et l'appareil terminal (100) via la communication sans fil.

3. Système de présentation d'informations (1000) selon la revendication 1, dans lequel
l'unité de détermination d'état de retard détermine l'état de retard en obtenant un temps de traitement côté appareil terminal nécessaire pour que l'appareil terminal (100) présente l'image prédite après l'acquisition de l'image capturée, en ajoutant le temps de traitement côté appareil terminal au temps de retard de la communication sans fil, et en calculant un temps de retard du traitement de présentation d'informations.

4. Système de présentation d'informations (1000) selon l'une quelconque des revendications 1 à 3, dans lequel
l'unité de détermination d'état de retard détermine si la communication sans fil est interrompue, et amène l'unité de présentation (30) à indiquer que la communication sans fil est interrompue lorsque la communication sans fil est interrompue.

5. Système de présentation d'informations (1000) selon l'une quelconque des revendications 1 à 4, dans lequel
l'unité de détermination d'état de retard détermine un degré de fiabilité de la communication sans fil en fonction de l'état de retard, et
l'unité de présentation (30) présente le degré de fiabilité.

6. Système de présentation d'informations (1000) selon l'une quelconque des revendications 1 à 5, dans lequel
l'appareil terminal (100) comprend en outre une unité de génération de ligne de guidage configurée pour générer une ligne de guidage le long d'une trajectoire sur laquelle le véhicule est censé se déplacer en se basant sur les informations d'état du véhicule, et
l'unité de présentation (30), lors de la superposition de la ligne de guidage générée sur l'image prédite, modifie une forme d'affichage de la ligne de guidage en fonction de l'état de retard déterminé par l'unité de détermination d'état de retard.

7. Système de présentation d'informations (1000) selon l'une quelconque des revendications 1 à 6, dans lequel
l'appareil terminal (100) comprend en outre une unité d'acquisition d'informations de détection d'objet mobile configurée pour acquérir des informations de détection indiquant si un objet mobile est présent autour du véhicule, et
l'unité de détermination d'état de retard détermine l'état de retard lors de l'acquisition d'informations de détection indiquant qu'un objet mobile est présent.

8. Système de présentation d'informations (1000) selon l'une quelconque des revendications 1 à 7, dans lequel
l'appareil photo (1) comporte une pluralité d'appareils photo (1a, 1b, 1c, 1d, 1e) montés à différentes positions sur le véhicule, et
l'unité de génération d'image prédite génère une image prédite obtenue en projetant des images prédites sur un plan de projection dans lequel le véhicule est vu d'un point de vue virtuel au-dessus de la position calculée du véhicule, les images prédites étant des images qui sont capturées par la pluralité d'appareils photo (1a, 1b, 1c, 1d, 1e) à la position calculée.
